# EUROPEAN PATENT APPLICATION

(11) **EP 2 631 182 A2**
(43) Date of publication of application: **28.08.2013**
(21) Application number: 13154889.3
(22) Date of filing: 12.02.2013
(51) Int. Cl.: B64D 41/00

(54) **An auxiliary power system**

(30) Priority: 22.02.2012 GB 201202990; 13.09.2012 GB 201216354
(71) Applicant: Rolls-Royce plc, London SW1E 6AT (GB)
(72) Inventor: Hillel, Malcolm, Derby, Derbyshire DE72 2AJ (GB)
(74) Representative: Hartley, Andrew Colin

(57) **Abstract**

This invention relates to an aircraft (10) having an auxiliary power system (14), the auxiliary power system comprising: a reciprocating engine (16) having an air inlet (18) and an exhaust system (20) including an energy recovery system, in particular a turbine (26); a compressed air source, in particular the passenger cabin (12), for providing compressed air to the air inlet (18); and an electrical generator (22), which is driveably connected to the reciprocating engine (16) for providing electrical power.

## Description

### Technical Field of Invention

This invention relates to an auxiliary power system for an aircraft which utilises a reciprocating engine that receives compressed air from a pressurised vessel. In particular, the invention finds utilisation in civil aircraft in which the pressurised vessel is the passenger cabin.

### Background of Invention

Auxiliary Power Units (APUs) are well known in modern aircraft and typically include a small gas turbine engine to provide electrical and hydraulic power to the aircraft. APUs are used whilst the aircraft is on the ground when the main engines are not running and therefore not capable of providing power. APUs are also sometimes required to provide power when the aircraft is in the air.

As with all gas turbine engines, the APU engines include a compressor, a combustor and a turbine. Air is compressed and combusted with fuel at very high temperatures before being passed through a turbine to extract energy which is used to drive an electrical generator or the like. The exhaust gases are then dumped overboard. The work cycle of these small, low cycle pressure ratio engines is inherently costly in terms of fuel consumption and could be improved in many ways.

US5722229, which is hereby incorporated by reference, attempts to overcome some of the inefficiencies of using a gas turbine engine for an APU by supplying compressed air from a pressurised passenger cabin. Thus, the air is partially compressed before it enters the APU thereby reducing the workload carried out by the compressor which would ordinarily have received air taken from outside the aircraft. Further, it extracts energy from the compressed cabin air which would otherwise simply be dumped overboard.

Although the gas turbine arrangement described in US'229 improves the efficiency of the overall system, they are generally still considered to be problematic because of the amount of air which is required, the level of compression needed, and the associated noise of the system, both internal to the aircraft and external from the exhaust.

### Statements of Invention

The present invention provides an aircraft having an auxiliary power system, the auxiliary power system, comprising: a reciprocating engine having an air inlet and an exhaust system; a compressed air source for providing compressed air to the air inlet; and, an electrical machine driveably connected to the reciprocating engine for providing electrical power. Providing a reciprocating engine in an aircraft makes for increased weight which is intuitively avoided by skilled artisans in the technical field of aviation. However, with this invention, it is recognised that the fuel efficiency of a reciprocating engine can be significantly improved if a source of compressed air is used to feed the engine, particularly when the compressed air is taken from the passenger cabin. Further, providing a reciprocating engine with various other turbines and compressors in various configurations allows for the efficiency of the system to be increased at various speeds and altitudes during flight cycles, and the varying power requirements across the range of operating altitudes to be met.

The compressed air source may be the passenger cabin of the aircraft. The exhaust system may include an energy recovery system.

The energy recovery system may be a turbine.

The aircraft may further comprise a second electrical generator which is coupled to and driven by the energy recovery system turbine.

The aircraft may further comprise a compressor downstream of the passenger cabin for compressing air taken from the passenger cabin and providing the compressed air to the air inlet. The compressor may be driven by an electrical machine. The electrical machine may receive electrical power from the second electrical generator.

The electrical machine and second electrical generator may be mounted on a common shaft.

The aircraft may further comprise at least one duct for providing air from the passenger cabin to the air inlet. The duct may include an acoustic system for reducing noise from the air inlet entering the cabin.

The aircraft may further comprise a main compressor for pressurising the compressed air source. The exhaust recovery system may be arranged to power the main compressor.

The main compressor may be driveably connected to the exhaust recovery system.

The main compressor may be driveably connected to the inlet compressor.

The drive for the main compressor may include one or more electrical machines which are configurable as a motor or a generator such that the main compressor can be electrically driven or energy can be removed from the exhaust recovery turbine as required.

The main compressor may be driveably connected to the reciprocating engine.

The drivable connection may include an electrical machine.

The aircraft may include an independent fuel tank for supplying the engine. The engine may be operable on a biofeul.

The exhaust may be located on the aircraft and configured such that the exhaust flow is entrained into the boundary layer air of the aircraft during flight. The auxiliary power system may include a control device or apparatus to match the output pressure from the exhaust to ambient atmosphere outside of the aircraft in use. Such an apparatus may include variable geometry features within the turbine. Variable geometry features may include variable vanes or nozzle diameters or similar as are generally know in the art.

### Description of Drawings

An embodiment of the invention will now be described with the aid of the following drawings in which:
Figure 1 shows a schematic representation of a first embodiment.
Figure 2 shows a schematic representation of a second embodiment.
Figure 3 shows a schematic representation of a third embodiment.

### Detailed Description of Invention

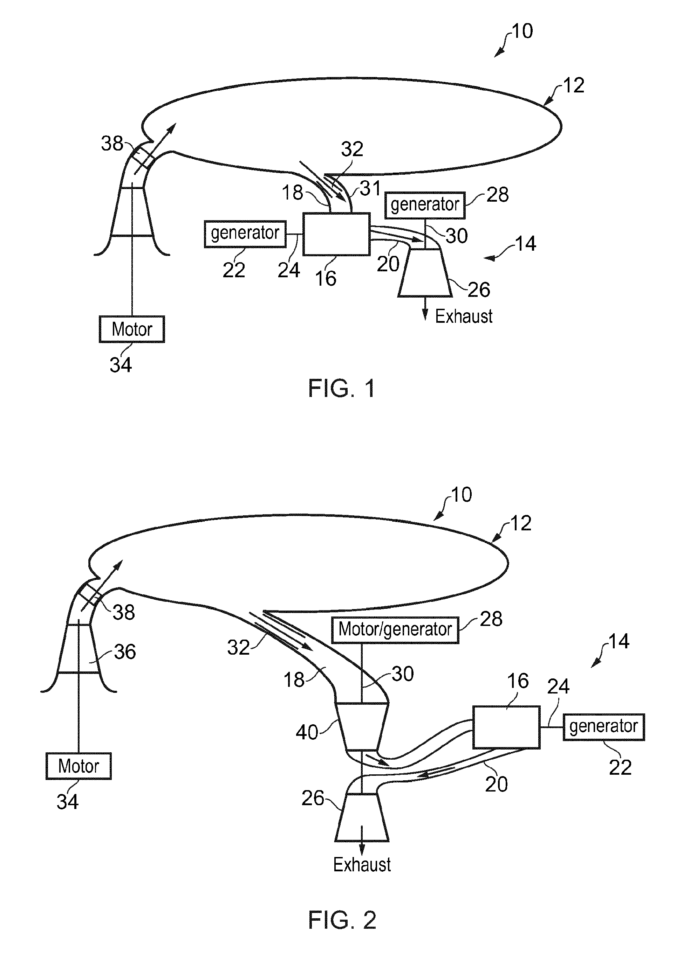

Figure 1 shows a schematic representation of a first embodiment of the invention in which there is an aircraft 10 having a passenger cabin 12 and an auxiliary power system 14. The auxiliary power system, APU, 14 includes a reciprocating engine in the form of a two stroke piston engine 16 as are well known in the art, but other engines may be used where applicable. The fuel type of the engine is application specific and may be diesel or kerosene for example, or so-called bio fuels such as bio diesel. It will be appreciated that a fuel tank which is independent of the main aircraft fuel tanks may be implemented for the fuel where required.

The engine 16 includes an air inlet 18 for receiving compressed air from a compressed air source in the form of the passenger cabin 12. The engine 16 is also provided with an exhaust 20 and a source of fuel (not shown). The engine 16 is connected to an electrical generator 22 via a mechanical rotating shaft 24 which provides rotative power between the engine 16 and the generator 22.

In use, compressed air and fuel are provided to the engine 16 for combustion which results in the rotation of the mechanical shaft 24 and the transfer of power to the rotor of the generator 22. The spent combustion products are exhausted overboard via the exhaust 20.

Reciprocating engines are known to be heavier and less power dense than gas turbines and therefore less attractive for aero related applications. However, a reciprocating engine requires far less air than a conventional gas turbine and is generally more fuel efficient. Further, a gas turbine APU will have significant noise from its high speed compressor impeller, which is difficult to attenuate when channelling the air via a duct between cabin and impeller. A piston engine intake makes significantly less noise and allows noise attenuating systems to be effectively implemented with a minimum weight penalty.

Another advantage of this auxiliary power system is that the pressure balancing for the range of operating conditions can be more easily met with a reciprocating engine because of any turbo- or super-charging equipment which can generally be smaller due to the reduced airflow. Thus, the system can be made more efficient for a broader range of operating conditions.

The electrical generator 22 can be any suitable generator known in the art. For aircraft applications, this is typically a wound field synchronous machine but other types, such as a permanent magnet machine, may be used. The electrical generator 22 is connected to an electrical network (not shown). The electrical network can be used to provide power to any chosen system on the aircraft 10.

The invention is particularly advantageous in that it recovers energy from the exhaust gases produced by the engine 16. Thus, there is a provided a turbine 26 in the exhaust gas flow path which is connected to a second electrical generator 28 via a second rotating shaft 30 and is configured to extract energy from the exhaust flow leaving the engine 16 which is compressed relative to the exterior of the aircraft 10, particularly when the aircraft 10 is at altitude. Thus, extracting energy from this compressed gas flow lowers the pressure so as to be better matched to the ambient environment which is exterior to the aircraft 10. The turbine 26 can be any known in the art which is suitable for the described purpose.

Providing the auxiliary power system 14 with an additional turbine 26 in this way allows a greater percentage of power to be extracted by the aircraft for a given fuel burn.

In the described embodiment, the energy extracted by the turbine 26 is used to drive a second electrical generator 28 as a means of converting the rotative mechanical energy provided by the turbine 26 into useable energy. This second electrical generator 28 maybe connected to the electrical network and provides a means of controlling the amount of energy which is extracted by the turbine.

The air intake 18 of the engine 16 receives compressed air from the passenger cabin 12 via a duct 31 of a suitable size and material. The duct 31 of the embodiment advantageously includes an acoustic system 32 in the form of acoustic panels which line the duct 31. The purpose of the acoustic panels 32 is to attenuate the noise produced by the engine 16, which would otherwise travel back up the duct 31 and into the passenger cabin 12. Thus, the noise which is projected back into the passenger cabin 12 from engine can be much reduced.

The compressed air for the passenger cabin 12 can be provided in a number of ways as known in the art. One known way is to provide compressor bleed air from one or more of the aircraft's propulsive gas turbine engines but, as shown in Figure 1, it is also possible to do so using a dedicated electrical motor 34 and main compressor 36 arrangement. As will be appreciated, the electrical motor 34 may receive electrical power from the auxiliary power system generator 22.

A cooler 38 is also provided in the cabin air compressor arrangement which is positioned to cool the compressed air before it is passed to the passenger cabin 12 as is known in the art. Such a cooler 38 may be a heat exchanger placed within the fuselage of the aircraft 10 so as to receive air from the exterior of the aircraft 10.

Figure 2 shows a modification of the system described in relation to Figure 1 and common numerals are used accordingly. In the embodiment of Figure 2, the auxiliary power system 14 includes a compressor 40 which is downstream of the pressurised cabin 12, but upstream of the engine air inlet 18. The compressor 40 rotor is mounted on a shaft 30 which is common to, or at least rotatively connected to, the rotational shaft of the exhaust turbine 26. Thus, in use, the rotation of the exhaust turbine 26 drives both the second electrical generator 28 and compressor 40. In this way there is provided a turbocharged engine configuration.

The compressor 40 is configured to compress the air taken from the cabin 12 so as to allow the engine 16 to operate in varying conditions. Providing an additional compressor increases the efficiency and power available from the engine, both on the ground and in flight. Further, pressurised cabin air is typically lower than sea level atmospheric pressure and so requires further compression to allow the engine 16 to operate efficiently. Providing a compressor 40 allows the pressure entering the air intake 18 to be tailored as required so as to maximise the performance of the engine 16.

In this embodiment, the electrical machine of the second electrical generator 28 is arranged to act in generating and motoring modes. Thus, it is possible for the compressor 40 to be driven prior to the engine 16 being started or when the turbine 26 cannot extract sufficient energy from the exhaust gas. It will be appreciated, that the electrical machine 28 will include known apparatus in order to allow it to be operated and controlled in motoring and generating functions where the motoring function is required. The motoring may not be required in some embodiments.

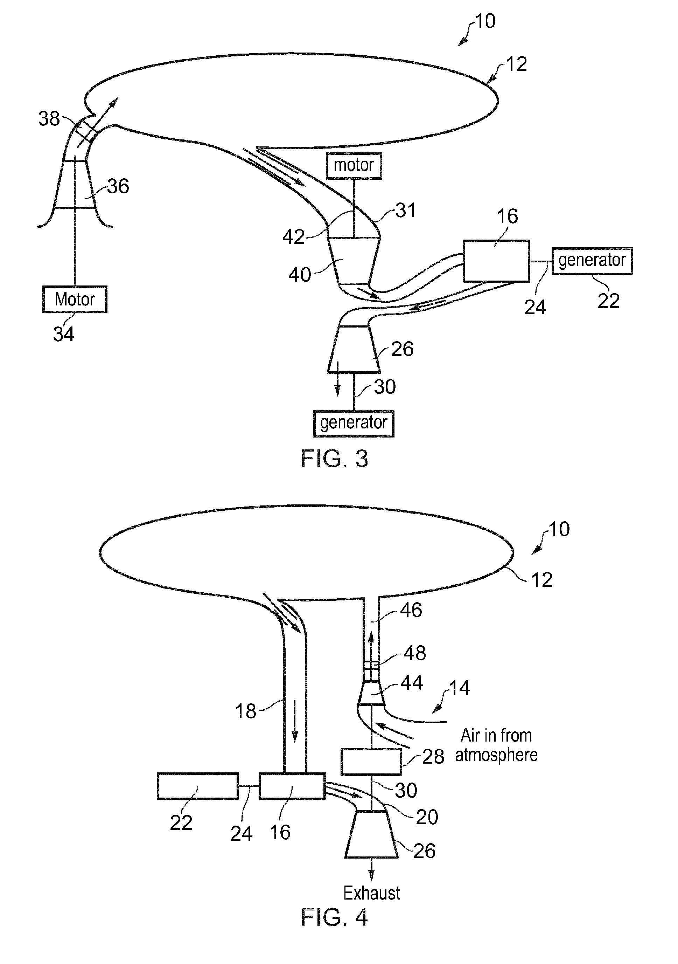

In the embodiment shown in Figure 3, which provides a modification of the embodiment shown in Figure 2, the compressor 40 and turbine 26 are mounted on different shafts (42 and 30 respectively) which are not rotatably connected, with the turbine shaft 30 being coupled to the second electrical generator 28 and the compressor 40 shaft being connected to a separate electrical machine 44 which is energised to drive the compressor 40. Thus, this configuration represents a supercharged engine.

The control of the auxiliary power system 14 is such that the efficiency of the reciprocating engine be maximised for a given electrical load required from the electrical generator. Or, alternatively, is such that an efficient use of the compressed cabin air can be made before it is ejected overboard. Thus, either or both of the compressor 40 and turbine 26 may be controlled to provide the required optimum inlet and exhaust pressures. Such control may be provided by altering the input drive to the compressor and or the load taken from the second electrical generator 28. Other control methods may be used as are known in the art for supercharged and turbo charged engines. It will be apparent that the engine control will take account of the pressure provided by the pressurised cabin.

A further consideration for the auxiliary power system 14 is the dumping of the exhaust flow overboard after it has passed through the exhaust turbine 26. The pressure on the outside of the aircraft 10 will vary according to the flight conditions being experienced. Such conditions may include altitude, flight speed, ambient pressure etc. Thus, in one embodiment, the exhaust is located in an advantageous location on the fuselage of the aircraft and is configured to entrain the exhaust flow and boundary layer air of the aircraft so as to provide minimal disruption to the airflow. Further, the auxiliary power system 14 may also include a control device or apparatus to help match the output pressure from the exhaust to ambient atmosphere outside of the aircraft. Such an apparatus may include variable geometry features within the turbine. By variable geometry it will be appreciated that this may include variable vanes or nozzle diameters etc.

Figures 4 to 8 all relate to embodiments of the invention in which the auxiliary power system 14 is used in various ways to power the cabin air compression system. Corresponding numerals are used to denote similar features to those used in Figures 1 to 3.

Thus, in Figure 4 there is shown a schematic representation of an aircraft 10 having a passenger cabin 12 and an auxiliary power system 14. The auxiliary power system, APU, 14 includes a reciprocating engine having an air inlet 18 for receiving compressed air from the passenger cabin 12, an exhaust 20 and a source of fuel (not shown). The engine 16 is connected to an electrical generator 22 via a mechanical rotating shaft 24 which provides rotative power between the engine 16 and the generator 22.

A turbine 26 is included in the exhaust gas flow path and is connected to an electrical machine 28 via a second rotating shaft 30 and is configured to extract energy from the exhaust flow leaving the engine 16 which is compressed relative to the exterior of the aircraft 10, particularly when the aircraft 10 is at altitude. Thus, extracting energy from this compressed gas flow lowers the pressure so as to be better matched to the ambient environment which is exterior to the aircraft 10. The turbine 26 can be any known in the art which is suitable for the described purpose.

In the described embodiment, the energy recovery turbine 26 is also coupled to a main compressor 44 which pressurises the cabin air. Hence, the rotational energy extracted by the exhaust turbine 26 can be used to drive the main compressor or to generate electrical energy as required. Alternatively, the electrical machine 28 may be used as a motor to start the engine 16 or to drive the compressor using electrical power taken from the electrical system and its associated power sources such as gas turbine engine driven generators. When generating the electrical machine 28 maybe connected to the electrical network and provide a means of controlling the amount of energy which is extracted by the turbine 26. It will be appreciated that where an electrical machine is used to drive the main compressor, there may be more than one machine so as to better suit the motoring and generating functions accordingly.

The combination of the electrical machine and the cabin air compressor being driven by the exhaust turbine is particularly advantageous as it allows the recovery of the energy in the compressed airflow either in electrical power or by compressing air for the cabin. Further, the electrical machine can be driven as a motor to drive the cabin air compressor from the main electrical system thereby supplementing the power recovered from the exhaust flow. Hence, the amount of power taken or provided by the electrical machine from the exhaust turbine can be adjusted as per the operating conditions. Having flexibility in the form of a motor-generator, variable area exhaust nozzle, variable guide vanes or similar, enable the efficiency of the system to be maximised across the operating envelope of the aircraft.

The cabin air compressor 44 which is driven from the exhaust turbine 26 may be part of a larger cabin air compression system and may be operable in conjunction with one or more other cabin air compressors which are driven in more conventional ways as described above in relation to Figure 1.

It will be appreciated that the duct which couples the main compressor 44 with the cabin 12 may incorporate various acoustic treatments such as linings 46 and cooling equipment 48 as required to maintain a suitable environment within the cabin.

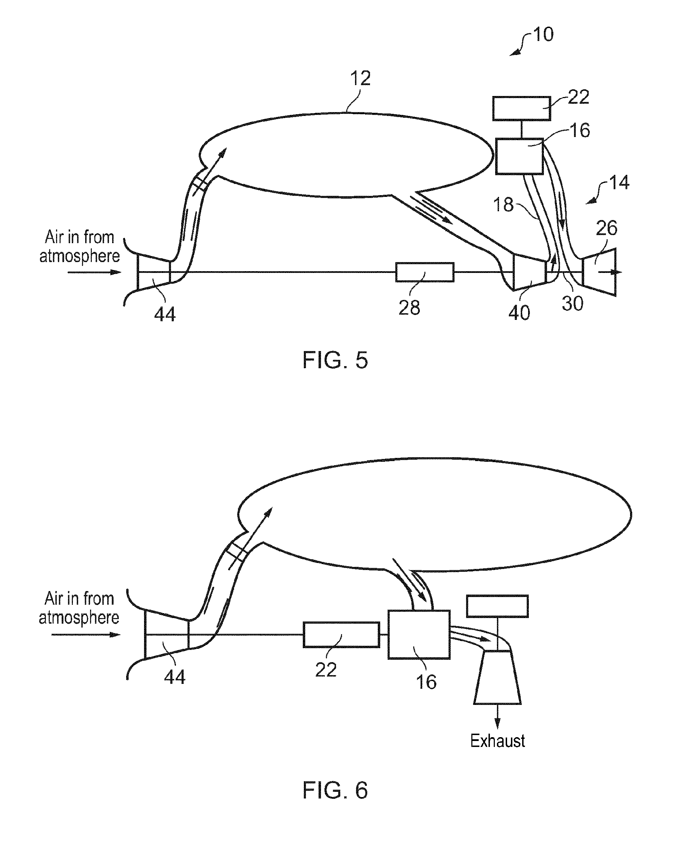

Figure 5 shows a modification of the aircraft 10 described in relation to Figure 4 and common reference numerals are used accordingly. In the embodiment of Figure 5, the auxiliary power system 14 includes a compressor 40 which is downstream of the pressurised cabin 12, but upstream of the engine air inlet 18. The compressor 40 rotor is mounted on a shaft 30 which is common to, or at least rotatably connected to, the rotational shaft of the exhaust turbine 26 and the drive of the main compressor 44. Thus, in use, the rotation of the exhaust turbine 26 drives the second electrical machine 28, inlet compressor 40 and main compressor.

In this embodiment, the electrical machine 28 is arranged to act in generating and motoring modes as described above for Figure 4, and also to allow the compressor 40 to be driven prior to the engine 16 being started or when the turbine 26 cannot extract sufficient energy from the exhaust gas to drive both the inlet compressor 40 and the main compressor 44. It will be appreciated, that the electrical machine 28 will include known apparatus in order to allow it to be operated and controlled in motoring and generating functions where the motoring function is required.

In the embodiment shown in Figure 6, the cabin air compressor 44 is driveably connected to the mechanical output of the engine 16. Thus, the engine 16 can be driven as required to provide all of the power for the cabin air compressor 44 and to provide further electrical energy via the electrical generator 22 when required by the aircraft 12 electrical systems.

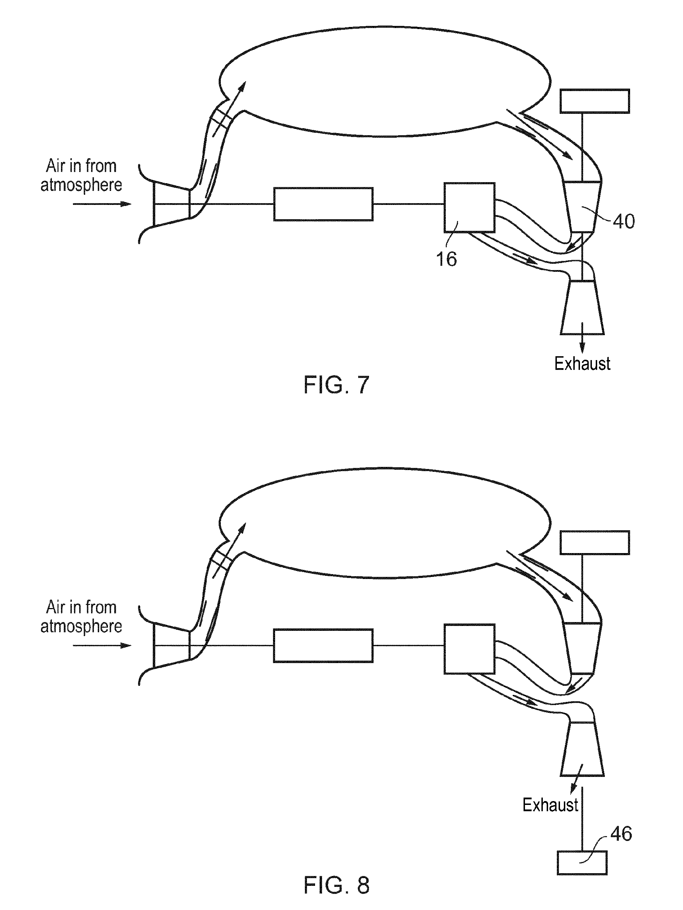

It will be appreciated that driveably connecting the cabin air compressor 44 to the engine 16 may be used in conjunction with or without other aspects of the described embodiments. Thus, as shown in Figure 7, there is shown an arrangement including an inlet compressor 40 for compressing the inlet air for the engine 16, and in Figure 8, there is shown an embodiment in which the exhaust turbine 26 and inlet compressor 40 are not driveably connected, with the exhaust turbine 26 being driven by an electrical machine 46 which can operate as a generator to extract electrical energy from the exhaust flow as described above.

## Claims

1. An aircraft having an auxiliary power system, the auxiliary power system, comprising:
a reciprocating engine having an air inlet and an exhaust system;
a compressed air source for providing compressed air to the air inlet; and,
a main electrical generator which is driveably connected to the reciprocating engine,
wherein the exhaust system includes an energy recovery system.

2. An aircraft as claimed in claim 1 wherein the compressed air source is the passenger cabin of the aircraft.

3. An aircraft as claimed in claim 1, wherein the energy recovery system is a turbine.

4. An aircraft as claimed in any of claim 1 or 2 further comprising a second electrical generator which is coupled to and driven by the energy recovery system.

5. An aircraft as claimed in any preceding claim further comprising an inlet compressor downstream of the compressed air source for further compressing the compressed air.

6. An aircraft as claimed in claim 5 wherein the inlet compressor is driven by an electrical machine.

7. An aircraft as claimed in claim 5 wherein the electrical machine which drives the inlet compressor receives electrical power from the second electrical generator.

8. An aircraft as claimed in claim 6 wherein the compressor electrical machine and second electrical generator are mounted on a common shaft.

9. An aircraft as claimed in any preceding claim further comprising at least one duct for providing air from the passenger cabin to the air inlet, the duct including an acoustic system for reducing noise from the air inlet entering the cabin.

10. An aircraft as claimed in any preceding claim, further comprising a main compressor for pressurising the compressed air source, wherein the exhaust recovery system is arranged to power the main compressor.

11. An aircraft as claimed in claim 10, wherein the main compressor is driveably connected to the exhaust recovery system.

12. An aircraft as claimed in either of claims 10 or 11, wherein the main compressor is driveably connected to the inlet compressor.

13. An aircraft as claimed in claim either of claims 11 and 12, wherein a drive for the main compressor includes one or more electrical machines which are configurable as a motor or a generator such that the main compressor can be electrically driven or energy can be removed from the exhaust recovery turbine as required.

14. An aircraft as claimed in claim 2 to 9, wherein the main compressor is driveably connected to the reciprocating engine.

15. An aircraft as claimed in claim 14, wherein the drivable connection is includes an electrical machine.
